(19) Europäisches Patentamt
European Patent Office
Office européen des brevets

(11) **EP 3 560 281 B1**

(12) **EUROPÄISCHE PATENTSCHRIFT**

(45) Veröffentlichungstag und Bekanntmachung des Hinweises auf die Patenterteilung:
**03.03.2021   Patentblatt 2021/09**

(51) Int Cl.:
***H05B 6/12*** *(2006.01)*

(21) Anmeldenummer: **17826561.7**

(22) Anmeldetag: **12.12.2017**

(86) Internationale Anmeldenummer:
**PCT/IB2017/057834**

(87) Internationale Veröffentlichungsnummer:
**WO 2018/116066 (28.06.2018 Gazette 2018/26)**

(54) **GARGERÄTEVORRICHTUNG**

COOKING APPLIANCE

DISPOSITIF POUR APPAREIL DE CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016   ES 201631668**

(43) Veröffentlichungstag der Anmeldung:
**30.10.2019   Patentblatt 2019/44**

(73) Patentinhaber: **BSH Hausgeräte GmbH**
**81739 München (DE)**

(72) Erfinder:
• **GALINDO PEREZ, Juan Jose**
**50007 Zaragoza (ES)**
• **LLORENTE GIL, Sergio**
**50009 Zaragoza (ES)**

• **MARTINEZ MUR, Maria del Carmen**
**50016 Zaragoza (ES)**
• **NEUMAYER, Dan**
**83233 Bernau (DE)**
• **OBON ABADIA, Carlos**
**50016 Zaragoza (ES)**
• **PALACIOS GASÓS, Jose Manuel**
**50018 Zaragoza (ES)**
• **PEREZ VISA, Enrique Javier**
**50005 Zaragoza (ES)**
• **RAMIREZ LABOREO, Edgar Jorge**
**50013 Zaragoza (ES)**
• **SANZ SERRANO, Fernando**
**44200 Calamocha (Teruel) (ES)**

(56) Entgegenhaltungen:
WO-A1-98/28945          DE-A1-102005 003 944
DE-U1-202007 012 602    US-A- 3 790 735

**Beschreibung**

Die Erfindung betrifft eine Gargerätevorrichtung nach dem Anspruch 1 und ein Verfahren zu einem Betrieb einer Gargerätevorrichtung nach dem Anspruch 11.

Aus dem Stand der Technik ist bereits eine Gargerätevorrichtung bekannt, welche eine Muffel mit fünf Muffelwandungen aufweist. Die Muffel begrenzt einen Garraum gemeinsam mit einer Gargerätetür. Innerhalb des Garraums ist eine Sensoreinheit angeordnet, welche in einem Betriebszustand eine Temperatur des Garraums detektiert. Eine Steuereinheit betreibt ein Heizelement in Abhängigkeit von der Temperatur des Garraums US3790735 offenbart eine Gargerätevorrichtung der Stand der Technik.

Die Aufgabe der Erfindung besteht insbesondere darin, eine gattungsgemäße Vorrichtung mit verbesserten Eigenschaften hinsichtlich eines Bedienkomforts bereitzustellen. Die Aufgabe wird erfindungsgemäß durch die Merkmale der Ansprüche 1 und 10 gelöst, während vorteilhafte Ausgestaltungen und Weiterbildungen der Erfindung den Unteransprüchen entnommen werden können.

Es wird eine Gargerätevorrichtung, insbesondere eine Induktionsgargerätevorrichtung und vorteilhaft eine Backofenvorrichtung, vorgeschlagen mit zumindest einer Muffel, welche zumindest eine Muffelwandung aufweist und zumindest einen Garraum wenigstens teilweise definiert, mit zumindest einem Heizelement, welches zu einer Beheizung der Muffelwandung vorgesehen ist, und mit zumindest einer Sensoreinheit, welche zu einer Detektion zumindest einer Temperatur der Muffelwandung vorgesehen ist.

Unter einer "Gargerätevorrichtung", insbesondere unter einer "Induktionsgargerätevorrichtung" und vorteilhaft unter einer "Induktionsbackofenvorrichtung", soll insbesondere zumindest ein Teil, insbesondere eine Unterbaugruppe, eines Gargeräts, insbesondere eines Induktionsgargeräts und vorteilhaft eines Induktionsbackofens, verstanden werden. Beispielsweise könnte ein die Gargerätevorrichtung aufweisendes Gargerät als ein Grillgerät und/oder als ein Dampfgargerät und/oder als ein Mikrowellengerät ausgebildet sein.

Unter einem "Induktionsgargerät", insbesondere unter einem "Induktionsbackofen", soll insbesondere ein Gargerät, insbesondere ein Backofen, verstanden werden, welcher wenigstens einen induktiven Betriebszustand aufweist und insbesondere zusätzlich zu dem induktiven Betriebszustand wenigstens einen Betriebszustand aufweisen könnte, welcher von einer induktiven Beheizung abweicht, wie beispielsweise wenigstens einen widerstandsbeheizten Betriebszustand.

Die Muffelwandung könnte beispielsweise eine Muffelrückwand und/oder zumindest eine Muffelseitenwand und/oder vorzugsweise zumindest eine Muffeldeckenwand und/oder bevorzugt zumindest eine Muffelbodenwand sein. Die Muffel begrenzt den Garraum insbesondere wenigstens teilweise und vorteilhaft in wenigstens einem Betriebszustand gemeinsam mit zumindest einer Gerätetür der Gargerätevorrichtung wenigstens im Wesentlichen. Die Gargerätevorrichtung weist insbesondere zumindest eine Gerätetür auf, welche den Garraum in wenigstens einem Betriebszustand wenigstens teilweise begrenzt. Der Garraum ist insbesondere zu einer Einbringung von Gargut, wie beispielsweise Lebensmitteln, zu einer Erhitzung und/oder zu einer Erwärmung und/oder zu einem Warmhalten des Garguts vorgesehen. Insbesondere ist die Muffelwandung eine den Garraum zumindest zu einer Seite hin begrenzende Wandung.

Die Gargerätevorrichtung weist insbesondere zumindest eine Gargeräterückwand auf. Die Gargeräterückwand ist insbesondere wenigstens im Wesentlichen und vorteilhaft vollständig innerhalb des Garraums angeordnet. Die Gargeräterückwand ist insbesondere in einem Nahbereich zumindest einer als Muffelrückwand ausgebildeten Muffelwandung angeordnet.

Unter einem "Heizelement" soll in diesem Zusammenhang insbesondere ein Element verstanden werden, welches dazu vorgesehen ist, Energie, vorzugsweise elektrische Energie, in Wärme umzuwandeln und insbesondere zumindest einem zu beheizenden Objekt zuzuführen. Das zu beheizende Objekt ist insbesondere die Muffelwandung. Zusätzlich könnte das zu beheizende Objekt beispielsweise ein in dem Garraum befindliches und/oder eingebrachtes Gargeschirr sein.

Unter einer "Sensoreinheit" soll in diesem Zusammenhang insbesondere eine Einheit verstanden werden, welche zumindest einen Detektor zu einer Detektion wenigstens einer Sensorkenngröße aufweist und welche dazu vorgesehen ist, einen die Sensorkenngröße kennzeichnenden Wert auszugeben, wobei es sich bei der Sensorkenngröße vorteilhaft um eine physikalische und/oder chemische Größe handelt. Insbesondere ist die Sensorkenngröße zumindest eine Temperatur der Muffelwandung.

Der Detektor könnte beispielsweise ein Widerstandssensor, wie insbesondere ein NTC-Sensor und/oder ein PTC-Sensor, sein und insbesondere einen temperaturabhängigen elektrischen Widerstand aufweisen, anhand welchem die Sensorkenngröße insbesondere detektierbar sein könnte. Alternativ oder zusätzlich könnte der Detektor beispielsweise ein Infrarot-Sensor und zu einer Detektion von Infrarot-Strahlung vorgesehen sein. Alternativ oder zusätzlich könnte der Detektor beispielsweise ein Thermoelement und/oder ein Strahlungsthermoelement sein. Der Detektor könnte alternativ oder zusätzlich beispielsweise ein Widerstandsthermometer sein.

Die Sensoreinheit könnte insbesondere zumindest einen weiteren Detektor aufweisen, welcher insbesondere zu einer Detektion zumindest einer weiteren Sensorkenngröße vorgesehen sein könnte. Beispielsweise könnte die weitere Sensorkenngröße zumindest eine Feuchtigkeit zumindest eines sich in dem Garraum befindlichen Fluids und/oder zumindest eine Strömungsgeschwindigkeit zumindest eines sich in dem Garraum befindlichen Fluids und/oder zumindest eine Temperatur zumindest eines sich in dem Garraum befindlichen Fluids und/oder zumindest eine Temperatur zumindest eines sich in dem Garraum befindlichen Garguts sein. Alternativ oder zusätzlich könnte der weitere Detektor Teil zumindest einer zweiten Sensoreinheit und/oder zumindest einer dritten Sensoreinheit und/oder zumindest einer vierten Sensoreinheit sein. Die vierte Sensoreinheit könnte beispielsweise zumindest einen weiteren Detektor aufweisen, welcher zu einer Detektion einer Feuchtigkeit zumindest eines sich in dem Garraum befindlichen Fluids vorgesehen sein könnte und welcher insbesondere als ein Lambda-Sensor ausgebildet sein könnte. Alternativ oder zusätzlich könnte die vierte Sensoreinheit beispielsweise zumindest einen weiteren Detektor aufweisen, welcher zu einer Detektion einer Strömungsgeschwindigkeit zumindest eines sich in dem Garraum befindlichen Fluids vorgesehen sein könnte.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Bedienkomfort erreicht werden. Insbesondere kann eine effiziente Durchführung zumindest eines Garprozesses, wie beispielsweise eines Grill-Garprozesses, ermöglicht werden. Neuartige Betriebsmodi und/oder Garfunktionen können insbesondere bereitgestellt werden. Die Sensoreinheit kann insbesondere zu Sicherheitszwecken verwendet werden, wie beispielsweise zu einer Vermeidung einer Überhitzung der Muffelwandung und damit insbesondere zu einer Verhinderung zumindest einer Beschädigung der Muffelwandung und/oder von an der Muffelwandung angeordnetem Emaille. Durch die Detektion der Temperatur der Muffelwandung kann insbesondere eine Ermittlung einer auf Wärmestrahlung beruhenden Leistung ermöglicht werden.

Ferner wird vorgeschlagen, dass die Sensoreinheit dazu vorgesehen ist, die Temperatur der Muffelwandung an der heißesten Stelle der Muffelwandung zu detektieren. Die Sensoreinheit könnte beispielsweise zumindest in einem Nahbereich der in wenigstens einem Betriebszustand heißesten Stelle der Muffelwandung angeordnet sein, um insbesondere die Temperatur der Muffelwandung an dieser Stelle zu detektieren. Die Sensoreinheit könnte beispielsweise zumindest einen als Widerstandssensor ausgebildeten Detektor aufweisen, welcher in dem Nahbereich der heißesten Stelle der Muffelwandung angeordnet sein könnte und durch Veränderung seines Widerstands die Temperatur an der heißesten Stelle der Muffelwandung detektieren könnte. Alternativ oder zusätzlich könnte die Sensoreinheit beabstandet zu der heißesten Stelle der Muffelwandung angeordnet sein. Insbesondere könnte die Sensoreinheit zumindest einen als Infrarot-Sensor ausgebildeten Detektor aufweisen, welcher zumindest eine in wenigstens einem Betriebszustand von der heißesten Stelle der Muffelwandung ausgehende Infrarot-Strahlung detektieren könnte, um insbesondere die Temperatur der Muffelwandung an dieser Stelle zu detektieren. Die Sensoreinheit könnte beispielsweise in direktem Kontakt mit der Muffelwandung angeordnet sein und insbesondere in dieser Stellung an der Muffelwandung befestigt sein. Beispielsweise könnte die Sensoreinheit alternativ oder zusätzlich an die Muffelwandung angeschweißt sein. Dadurch kann die Muffelwandung insbesondere auf eine maximale Temperatur aufgeheizt und gleichzeitig eine Beschädigung der Muffelwandung, insbesondere von an der Muffelwandung angeordnetem Emaille, und/oder eine Überhitzung vermieden werden.

Das Heizelement könnte beispielsweise als ein Widerstandsheizelement ausgebildet sein. Vorzugsweise ist das Heizelement als ein Induktionsheizelement ausgebildet. Insbesondere ist das als Induktionsheizelement ausgebildete Heizelement dazu vorgesehen, ein elektromagnetisches Wechselfeld insbesondere mit einer Frequenz zwischen 17 kHz und 150 kHz zu erzeugen. Das als Induktionsheizelement ausgebildete Heizelement ist insbesondere dazu vorgesehen, mittels des von dem Induktionsheizelement erzeugten elektromagnetischen Wechselfelds in zumindest einem, insbesondere metallischen, vorzugsweise ferromagnetischen, zu beheizendem Objekt durch Wirbelstrominduktion und/oder Ummagnetisierungseffekte Wärme zu erzeugen, insbesondere durch eine Umwandlung des elektromagnetischen Wechselfelds in dem zu beheizenden Objekt in Wärme. Das als Induktionsheizelement ausgebildete Heizelement ist insbesondere zu einer insbesondere flachen Spule gewickelt und weist insbesondere mindestens drei, vorteilhaft mindestens fünf, besonders vorteilhaft mindestens acht, vorzugsweise mindestens zwölf und besonders bevorzugt eine Vielzahl an Windungen auf. Dadurch kann insbesondere ein besonders hoher Bedienkomfort bereitgestellt werden. Insbesondere kann eine schnelle und/oder optimale Erhitzung der Muffelwandung ermöglicht werden.

Die Gargerätevorrichtung könnte beispielsweise ausschließlich das als Induktionsheizelement ausgebildete Heizelement und/oder insbesondere zusätzlich zu dem als Induktionsheizelement ausgebildeten Heizelement ausschließlich weitere als Induktionsheizelement ausgebildete Heizelemente aufweisen. Vorzugsweise weist die Gargerätevorrichtung zumindest ein weiteres Heizelement auf, welches als ein Widerstandsheizelement ausgebildet ist. Insbesondere weist das als Widerstandsheizelement ausgebildete Heizelement zumindest einen Heizleiter auf, welcher insbesondere dazu vorgesehen ist, in wenigstens einem Betriebsmodus elektrischen Strom zu führen. Insbesondere ist das als Widerstandsheizelement ausgebildete Heizelement dazu vorgesehen, in Abhängigkeit von einer Stromstärke des durch den Heizleiter geführten elektrischen Stroms zumindest ein zu beheizendes Objekt mittels einer Erhitzung des Heizleiters aufgrund des von ihm geführten elektrischen Stroms zu erhitzen und/oder zu beheizen. Die Gargerätevorrichtung weist insbesondere zumindest eine Gebläseeinheit auf. Insbesondere ist die Gebläseeinheit zumindest in einem Nahbereich des als Widerstandsheizelement ausgebildeten Heizelements angeordnet und insbesondere dazu vorgesehen, von dem als Widerstandsheizelement ausgebildeten Heizelement erhitzte Luft in dem Garraum zu verteilen und/oder in den Garraum einzubringen. Dadurch kann insbesondere eine kostengünstige Ausgestaltung ermöglicht werden. In Kombination mit zumindest einem als Induktionsheizelement ausgebildeten Heizelement kann insbesondere eine hohe Vielfalt und/oder Flexibilität an Betriebsmodi und/oder Garprozessen bereitgestellt werden.

Ferner wird vorgeschlagen, dass die Gargerätevorrichtung zumindest eine zweite Sensoreinheit aufweist, welche zu einer Detektion zumindest einer Temperatur innerhalb des Garraums vorgesehen ist und welche insbesondere wenigstens im Wesentlichen und vorteilhaft vollständig innerhalb des Garraums angeordnet ist. Die zweite Sensoreinheit ist insbesondere dazu vorgesehen, eine Temperatur zumindest eines in dem Garraum befindlichen Fluids zu detektieren. Das in dem Garraum befindliche Fluid ist insbesondere eine in dem Garraum befindliche Luft. Dadurch kann insbesondere eine besonders optimale Regelung bestimmter Garprozesse, wie beispielsweise eines Heißluft-Garprozesses, erreicht werden.

Zudem wird vorgeschlagen, dass die Gargerätevorrichtung zumindest eine dritte Sensoreinheit aufweist, welche zu einer Detektion zumindest einer Temperatur zumindest eines innerhalb des Garraums befindlichen Garguts vorgesehen ist. Insbesondere könnte die Sensoreinheit zumindest einen Detektor aufweisen, welcher zu einer Einführung in der Gargut vorgesehen sein könnte und welcher insbesondere in wenigstens einem Betriebszustand wenigstens teilweise innerhalb des Garguts angeordnet sein könnte. Alternativ oder zusätzlich könnte die Sensoreinheit zumindest einen als Infrarot-Sensor ausgebildeten Detektor aufweisen, welcher insbesondere zu einer Detektion von insbesondere von dem Gargut emittierten Infrarot-Strahlung vorgesehen sein könnte, um die Temperatur des innerhalb des Garraums befindlichen Garguts zu detektieren. Dadurch kann insbesondere ein besonders optimales Garergebnis erzielt werden.

Weiterhin wird vorgeschlagen, dass die Gargerätevorrichtung zumindest eine Steuereinheit aufweist, welche dazu vorgesehen ist, in Abhängigkeit von der durch die Sensoreinheit detektierten Temperatur eine einem innerhalb des Garraums befindlichen Gargut zugeführte Leistung zu ermitteln. Insbesondere könnte die dem innerhalb des Garraums befindlichen Garguts zugeführte Leistung eine Wärmeleistung sein, welche insbesondere von dem Heizelement und/oder von dem weiteren Heizelement abgegeben und/oder erzeugt und/oder bereitgestellt sein könnte. Alternativ oder zusätzlich könnte die dem innerhalb des Garraums befindlichen Garguts zugeführte Leistung vorteilhaft eine Strahlungsleistung sein. Unter einer "Steuereinheit" soll insbesondere eine elektronische Einheit verstanden werden, die vorzugsweise in einer Steuer- und/oder Regeleinheit eines Gargeräts wenigstens teilweise integriert ist und die vorzugsweise dazu vorgesehen ist, zumindest das Heizelement zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Steuereinheit könnte die dem innerhalb des Garraums befindlichen Garguts zugeführte Leistung beispielsweise durch Vergleich der durch die Sensoreinheit detektierten Temperatur mit zumindest einem in der Speichereinheit hinterlegten Referenzwert ermitteln. Der Referenzwert könnte in der Speichereinheit beispielweise tabellarisch und/oder in Form zumindest einer Abhängigkeit hinterlegt sein. Alternativ oder zusätzlich könnte die Steuereinheit zu der Ermittlung der dem innerhalb des Garraums befindlichen Gargut zugeführten Leistung zumindest eine Rechenoperation ausführen und/oder zumindest eine mathematische Gleichung lösen. Insbesondere ist die Steuereinheit dazu vorgesehen, in Abhängigkeit der von der Sensoreinheit detektierten Temperatur eine Temperatur der Muffelwandung, insbesondere durch ein Betreiben des Heizelements, zu steuern und/oder zu regeln. Die Steuereinheit ist insbesondere dazu vorgesehen, bei der Steuerung und/oder Regelung der Temperatur der Muffelwandung verschiedene Arten von Gargut und/oder verschiedene Positionen des Garguts innerhalb des Garraums und/oder verschiedenen Einschubhöhen des Garguts innerhalb des Garraums zu berücksichtigen. Dadurch kann insbesondere ein hoher Bedienkomfort erzielt werden. Insbesondere kann eine optimale Regelung der dem Gargut zugeführten Leistung und/oder ein optimales Garergebnis ermöglicht werden, und zwar insbesondere unabhängig von weiteren Variablen, wie beispielsweise von einer Art des Garguts und/oder von in dem Garraum befindlichen Gegenständen und/oder von einer Position zumindest einer Sensoreinheit innerhalb des Garraums. Anhand der dem Gargut zugeführten Leistung kann insbesondere ein Bräunungsgrad des Garguts optimal eingestellt und/oder beeinflusst werden, beispielsweise bei einem als Pizza ausgebildeten Gargut.

Beispielsweise könnte die Steuereinheit dazu vorgesehen sein, die einem innerhalb des Garraums befindlichen Gargut zugeführte Leistung in jedem Betriebsmodus in Abhängigkeit von durch die gleiche Sensoreinheit detektierte Temperatur zu ermitteln. Vorzugsweise ist die Steuereinheit dazu vorgesehen, die einem innerhalb des Garraums befindlichen Gargut zugeführte Leistung in verschiedenen Betriebsmodi in Abhängigkeit von durch verschiedene Sensoreinheiten detektierten Temperaturen zu ermitteln. Insbesondere ist die Steuereinheit dazu vorgesehen, bei der Ermittlung der dem innerhalb des Garraums befindlichen Gargut zugeführten Leistung verschiedene Arten der dem Gargut zugeführten Leistung zu berücksichtigen. Eine Art der dem Gargut zugeführten Leistung könnte beispielsweise eine auf Konvektion beruhende Leistung und/oder eine auf Wärmestrahlung beruhende Leistung und/oder eine auf Wärmeleitung beruhende Leistung sein. Insbesondere ist die Steuereinheit dazu vorgesehen, bei der Ermittlung der dem innerhalb des Garraums befindlichen Gargut zugeführten Leistung zumindest eine auf Konvektion beruhende Leistung und/oder eine auf Wärmestrahlung beruhende Leistung und/oder eine auf Wärmeleitung beruhende Leistung zu ermitteln und diese insbesondere voneinander zu unterscheiden. Insbesondere ist die Steuereinheit dazu vorgesehen, bei der Ermittlung der dem innerhalb des Garraums befindlichen Gargut zugeführten Leistung die durch die zweite Sensoreinheit detektierte Temperatur und/oder die durch die dritte Sensoreinheit detektierte Temperatur zu berücksichtigen. Dadurch können insbesondere verschiedene Anteile einer dem Gargut zugeführten Leistung abgeschätzt werden, wie beispielsweise ein Anteil an auf Konvektion beruhender Leistung und/oder ein Anteil von auf Wärmestrahlung beruhender Leistung, und zwar insbesondere in einem Vergleich zu einer Ausgestaltung, bei welcher lediglich eine dem Gargut zugeführte Gesamtleistung abgeschätzt werden kann. Insbesondere kann ein Bediener zumindest einen Betriebsmodus auswählen, bei welchen die Steuereinheit insbesondere neben einer Temperatur innerhalb des Garraum ebenfalls verschiedene Anteile einer dem Gargut zugeführten Leistung abgeschätzt, wodurch ein besonders hoher Bedienkomfort insbesondere in einem Vergleich zu einer Ausgestaltung erzielt werden kann, bei welcher ein Bediener insbesondere eine vordefinierte Kombination von Heizelement und Gebläseeinheit auszuwählen hat. Insbesondere kann eine Verdampfung von Wasser, welche insbesondere stark von einer Art einer dem Gargut zugeführten Leistung abhängig ist, besonders gut kontrolliert und/oder geregelt werden, und zwar noch besser, wenn zumindest eine Sensoreinheit zumindest einen Feuchtigkeitssensor aufweist.

Zudem wird vorgeschlagen, dass die Steuereinheit dazu vorgesehen ist, bei der Ermittlung der einem innerhalb des Garraums befindlichen Gargut zugeführten Leistung eine Emissivität der Muffelwandung zu berücksichtigen. Insbesondere weist die Muffelwandung und/oder eine Beschichtung der Muffelwandung eine Emissivität von mindestens 0,8, insbesondere von mindestens 0,85, vorteilhaft von mindestens 0,9, besonders vorteilhaft von mindestens 0,95 und vorzugsweise von mindestens 0,97 auf. Beispielsweise könnte die Muffelwandung und/oder eine Beschichtung der Muffelwandung wenigstens im Wesentlichen ein schwarzer Strahler sein und insbesondere eine Emissivität von mindestens 0,99 aufweisen. Insbesondere könnte die Muffelwandung zumindest eine Beschichtung aufweisen, welche insbesondere wenigstens zu einem Großteil aus Emaille bestehen könnte. Die Emissivität eines Objekts ist insbesondere ein Emissionsgrad des Objekts. Dadurch kann die einem innerhalb des Garraums befindlichen Gargut zugeführte Leistung insbesondere besonders präzise ermittelt werden.

Ein besonders hoher Bedienkomfort kann insbesondere erreicht werden durch ein Gargerät, insbesondere durch ein Induktionsgargerät und vorteilhaft durch einen Induktionsbackofen, mit zumindest einer erfindungsgemäßen Gargerätevorrichtung, insbesondere mit zumindest einer erfindungsgemäßen Induktionsgargerätevorrichtung und vorteilhaft mit zumindest einer erfindungsgemäßen Induktionsbackofenvorrichtung.

Ein Bedienkomfort kann insbesondere weiter gesteigert werden durch ein Verfahren zu einem Betrieb einer erfindungsgemäßen Gargerätevorrichtung, insbesondere einer erfindungsgemäßen Induktionsgargerätevorrichtung und vorteilhaft einer erfindungsgemäßen Induktionsbackofenvorrichtung, mit zumindest einer Muffelwandung und mit zumindest einem Heizelement, welches zu einer Beheizung der Muffelwandung vorgesehen ist, wobei in wenigstens einem Betriebszustand eine Temperatur der Muffelwandung gemessen wird.

Die Gargerätevorrichtung soll hierbei nicht auf die oben beschriebene Anwendung und Ausführungsform beschränkt sein. Insbesondere kann die Gargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1      ein Gargerät mit einer Gargerätevorrichtung in einer schematischen Darstellung,

Fig. 2      eine einen Garraum begrenzende Muffel, ein Widerstandsheizelement, eine Gebläseeinheit und zwei Induktionsheizelemente der Gargerätevorrichtung in einer schematischen Darstellung und

Fig. 3      ein schematisches Diagramm, in welchem eine Temperatur über der Zeit und eine Leistung über der Zeit aufgetragen sind.

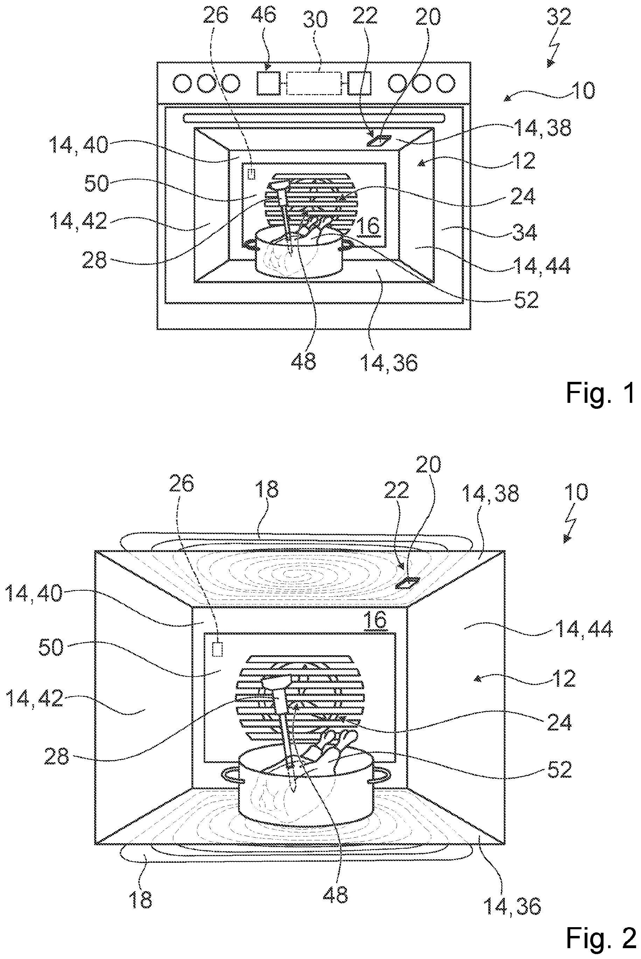

Fig. 1 zeigt ein Gargerät 32, welches als ein Induktionsgargerät ausgebildet ist, mit einer Gargerätevorrichtung 10, welche als eine Induktionsgargerätevorrichtung ausgebildet ist. Beispielsweise könnte das Gargerät 32 als ein Grillgerät und/oder als ein Dampfgargerät und/oder als ein Mikrowellengerät ausgebildet sein. Im vorliegenden Ausführungsbeispiel ist das Gargerät 32 als ein Induktionsbackofen ausgebildet. Die Gargerätevorrichtung 10 ist als eine Induktionsbackofenvorrichtung ausgebildet.

Die Gargerätevorrichtung 10 weist eine Muffel 12 auf. Die Muffel 12 begrenzt einen Garraum 16 teilweise. Die Muffel 12 begrenzt den Garraum 16 in einem Betriebszustand gemeinsam mit einer Gargerätetür 34 im Wesentlichen. Die Gargerätevorrichtung 10 weist die Gargerätetür 34 auf.

Die Muffel 12 weist fünf Muffelwandungen 14 auf. Von mehrfach vorhandenen Objekten ist in den Figuren jeweils lediglich eines mit einem Bezugszeichen versehen. Die Muffelwandungen 14 definieren in dem Betriebszustand gemeinsam mit der Gargerätetür 34 den Garraum 16 im Wesentlichen.

Eine der Muffelwandungen 14 ist als eine Muffelbodenwand 36 ausgebildet. Eine der Muffelwandungen 14 ist als eine Muffeldeckenwand 38 ausgebildet. Eine der Muffelwandungen 14 ist als eine Muffelrückwand 40 ausgebildet. Zwei der Muffelwandungen 14 sind als eine Muffelseitenwand 42, 44 ausgebildet. Im Folgenden wird lediglich eine der Muffelwandungen 14 beschrieben.

Die Gargerätevorrichtung 10 weist eine Bedienerschnittstelle 46 zu einer Eingabe und/oder Auswahl von Betriebsparametern auf (vgl. Fig. 1), beispielsweise einer Heizleistung und/oder einer Heizleistungsdichte und/oder einer Heizzone. Die Bedienerschnittstelle 46 ist zu einer Ausgabe eines Werts eines Betriebsparameters an einen Bediener vorgesehen.

Die Gargerätevorrichtung 10 weist eine Steuereinheit 30 auf. Die Steuereinheit 30 ist dazu vorgesehen, in Abhängigkeit von mittels der Bedienerschnittstelle 46 eingegebenen Betriebsparametern Aktionen auszuführen und/oder Einstellungen zu verändern. Die Steuereinheit 30 regelt in einem Betriebszustand eine Energiezufuhr zu zumindest einem Heizelement 18 (vgl. Fig. 2).

Im vorliegenden Ausführungsbeispiel weist die Gargerätevorrichtung 10 zwei Heizelemente 18 auf. Alternativ könnte die Gargerätevorrichtung 10 insbesondere eine andere Anzahl an Heizelementen 18 aufweisen. Beispielsweise könnte die Gargerätevorrichtung 10 genau ein einziges Heizelement 18 aufweisen. Alternativ könnte die Gargerätevorrichtung 10 beispielsweise zumindest drei, insbesondere zumindest vier, vorteilhaft zumindest fünf und vorzugsweise mehrere Heizelemente 18 aufweisen.

In einem Betriebszustand sind die Heizelemente 18 außerhalb des Garraums 16 angeordnet. Ein unteres Heizelement 18 der Heizelemente 18 ist in einer Einbaulage unterhalb der als Muffelbodenwand 36 ausgebildeten Muffelwandung 14 angeordnet. Das untere Heizelement 18 ist an der als Muffelbodenwand 36 ausgebildeten Muffelwandung 14 angeordnet.

Ein oberes Heizelement 18 der Heizelemente 18 ist in einer Einbaulage oberhalb der als Muffeldeckenwand 38 ausgebildeten Muffelwandung 14 angeordnet. Das obere Heizelement 18 ist an der als Muffeldeckenwand 38 ausgebildeten Muffelwandung 14 angeordnet.

Alternativ könnte zumindest ein Heizelement 18 an einer als Muffelseitenwand 42, 44 ausgebildeten Muffelwandung 14 und/oder an einer als Muffelrückwand 40 ausgebildeten Muffelwandung 14 angeordnet sein. Im Folgenden wird lediglich eines der Heizelemente 18 beschrieben.

Das Heizelement 18 ist zu einer Beheizung der Muffelwandung 14 vorgesehen, an welcher das Heizelement 18 angeordnet ist. Im vorliegenden Ausführungsbeispiel beheizt das Heizelement 18 die Muffelwandung 14 induktiv. Das Heizelement 18 ist als ein Induktionsheizelement ausgebildet.

Die Gargerätevorrichtung 10 weist eine Gebläseeinheit 48 auf (vgl. Fig. 1 und 2). Die Gebläseeinheit 48 weist ein um eine Drehachse drehbares Gebläserad auf. In dem Betriebszustand erzeugt die Gebläseeinheit 48 mittels des Gebläserads einen Fluidstrom. In dem Betriebszustand wälzt die Gebläseeinheit 48 innerhalb des Garraums 16 befindliche Fluide um.

Bei einer Betrachtung von einer Frontseite aus ist die Gebläseeinheit 48 in einem Rückbereich des Garraums 16 angeordnet. Die Gebläseeinheit 48 ist in einem Nahbereich der Muffelrückwand 40 angeordnet.

Die Gargerätevorrichtung 10 weist eine Gargeräterückwand 50 auf. Die Gargeräterückwand 50 ist innerhalb des Garraums 16 angeordnet. Bei einer Betrachtung von einer Frontseite aus ist die Gargeräterückwand 50 vor der Gebläseeinheit 48 angeordnet. Die Gargeräterückwand 50 ist in einem Nahbereich der Muffelrückwand 40 angeordnet.

Die Gargerätevorrichtung 10 weist ein weiteres Heizelement 24 auf (vgl. Fig. 1 und 2). Das weitere Heizelement 24 ist als ein Widerstandsheizelement ausgebildet. Bei einer Betrachtung von einer Frontseite aus ist das Heizelement 24 hinter der Gargeräterückwand 50 angeordnet. Das Heizelement 24 ist in einem Nahbereich der Muffelrückwand 40 angeordnet. Das Heizelement 24 ist in einem Nahbereich der Gebläseeinheit 48 angeordnet.

Die Gargerätevorrichtung 10 weist eine Sensoreinheit 20 auf (vgl. Fig. 1 und 2). Die Sensoreinheit 20 ist an der Muffelwandung 14 angeordnet. Im vorliegenden Ausführungsbeispiel ist die Sensoreinheit 20 innerhalb des Garraums 16 angeordnet. Die Sensoreinheit 20 ist zu einer Detektion einer Temperatur der Muffelwandung 14 vorgesehen.

In dem Betriebszustand detektiert die Sensoreinheit 20 eine Temperatur der Muffelwandung 14 an einer heißesten Stelle 22 der Muffelwandung 14. Die Sensoreinheit 20 ist an der heißesten Stelle 22 der Muffelwandung 14 angeordnet. Im vorliegenden Ausführungsbeispiel weist die Sensoreinheit 20 einen als Widerstandssensor ausgebildeten Detektor auf.

Die Gargerätevorrichtung 10 weist eine zweite Sensoreinheit 26 auf (vgl. Fig. 1 und 2). Die zweite Sensoreinheit 26 ist innerhalb des Garraums 16 angeordnet. Bei einer Betrachtung von einer Frontseite aus ist die zweite Sensoreinheit 26 hinter der Gargeräterückwand 50 angeordnet. Die zweite Sensoreinheit 26 ist in einem Nahbereich der Muffelrückwand 40 angeordnet. In dem Betriebszustand detektiert die zweite Sensoreinheit 26 eine Temperatur innerhalb des Garraums 16. Die zweite Sensoreinheit 26 detektiert in dem Betriebszustand eine Temperatur eines innerhalb des Garraums 16 befindlichen Fluids.

Die Gargerätevorrichtung 10 weist eine dritte Sensoreinheit 28 auf (vgl. Fig. 1 und 2). Die dritte Sensoreinheit 28 ist innerhalb des Garraums 16 angeordnet. In dem Betriebszustand detektiert die dritte Sensoreinheit 28 eine Temperatur eines innerhalb des Garraums 16 befindlichen Garguts 52. Die dritte Sensoreinheit 28 weist einen als Messfühler ausgebildeten Detektor auf. In dem Betriebszustand ist die Sensoreinheit 28 teilweise innerhalb des Garguts 52 angeordnet. Alternativ ist eine Ausgestaltung unter Vermeidung der dritten Sensoreinheit 28 denkbar. Insbesondere könnte die Steuereinheit 30 eine Temperatur eines innerhalb des Garraums 16 befindlichen Garguts 52 abschätzen, beispielsweise auf Basis der durch die Sensoreinheit 20 detektierten Temperatur und/oder der durch die zweite Sensoreinheit 26 detektierten Temperatur.

In dem Betriebszustand übermittelt die dritte Sensoreinheit 28 einen die Temperatur des innerhalb des Garraums 16 befindlichen Garguts 52 Wert drahtlos an die Steuereinheit 30. Alternativ oder zusätzlich könnte die Sensoreinheit 28 insbesondere mit der Steuereinheit 30 verbunden sein, insbesondere über ein elektrisches Kabel, und insbesondere einen die Temperatur des innerhalb des Garraums 16 befindlichen Garguts 52 Wert über die Verbindung an die Steuereinheit 30 übermitteln.

In dem Betriebszustand ermittelt die Steuereinheit 30 eine dem innerhalb des Garraums 16 befindlichen Gargut 52 zugeführte Leistung. Die Steuereinheit 30 ermittelt in dem Betriebszustand eine dem innerhalb des Garraums 16 befindlichen Gargut 52 zugeführte Leistung in Abhängigkeit von der durch die Sensoreinheit 20 detektierten Temperatur.

In dem Betriebszustand berücksichtigt die Steuereinheit 30 bei der Ermittlung der dem innerhalb des Garraums 16 befindlichen Gargut 52 zugeführten Leistung die durch die zweite Sensoreinheit 26 detektierte Temperatur. In dem Betriebszustand berücksichtigt die Steuereinheit 30 bei der Ermittlung der dem innerhalb des Garraums 16 befindlichen Gargut 52 zugeführten Leistung die durch die dritte Sensoreinheit 28 detektierte Temperatur.

In dem Betriebszustand ermittelt die Steuereinheit 30 die dem innerhalb des Garraums 16 befindlichen Gargut 52 zugeführte Leistung in verschiedenen Betriebsmodi in Abhängigkeit von durch verschiedene Sensoreinheiten 20, 26, 28 detektierten Temperaturen. Im vorliegenden Ausführungsbeispiel unterscheidet die Steuereinheit 30 drei Betriebsmodi. Alternativ könnte die Steuereinheit 30 eine größere Anzahl an Betriebsmodi unterscheiden.

In einem Konvektions-Betriebsmodus berücksichtigt die Steuereinheit 30 bei der Ermittlung der dem innerhalb des Garraums 16 befindlichen Gargut 52 zugeführten Leistung eine auf Konvektion beruhende Leistung. Die Steuereinheit 30 geht in dem Konvektions-Betriebsmodus näherungsweise von der Annahme aus, dass eine dem innerhalb des Garraums 16 befindlichen Gargut 52 zugeführte Leistung im Wesentlichen auf Konvektion beruht. In dem Konvektions-Betriebsmodus sind das weitere Heizelement 24 und die Gebläseeinheit 48 aktiviert und insbesondere das Heizelement 18 deaktiviert.

In dem Konvektions-Betriebsmodus verwendet die Steuereinheit 30 zu der Ermittlung der dem innerhalb des Garraums 16 befindlichen Gargut 52 zugeführten Leistung folgende Formel als Ausgangsbasis:

$$\dot{Q}_{conv} = h \cdot A_{conv} \cdot \left( T_{air} - T_{food} \right)$$

Hierin ist $h$ ein Konvektionskoeffizient, welcher insbesondere von einer Strömungsgeschwindigkeit eines in dem Garraum 16 befindlichen Fluids und von einer Temperatur eines in dem Garraum 16 befindlichen Fluids abhängig ist. $A_{conv}$ ist eine Oberfläche des innerhalb des Garraums 16 befindlichen Garguts 52. $T_{air}$ ist die von der zweiten Sensoreinheit 26 detektierte Temperatur. $T_{food}$ ist die von der dritten Sensoreinheit 28 detektierte Temperatur.

Die Steuereinheit 30 in dem Konvektions-Betriebsmodus verwendet zu der Ermittlung der dem innerhalb des Garraums 16 befindlichen Gargut 52 zugeführten Leistung folgende Formel:

$$\dot{Q}_{conv} = k_{conv} \cdot \left( T_{air} - T_{food} \right)$$

Hierin ist $k_{conv}$ ein bekannter Koeffizient, welcher insbesondere in einer Speichereinheit der Steuereinheit 30 gespeichert ist und welcher insbesondere mittels experimentellen Versuchen und/oder mittels theoretischen Berechnungen ermittelbar ist.

In einem Wärmestrahlungs-Betriebsmodus berücksichtigt die Steuereinheit 30 bei der Ermittlung der dem innerhalb des Garraums 16 befindlichen Gargut 52 zugeführten Leistung eine auf Wärmestrahlung beruhende Leistung. Die Steuereinheit 30 geht in dem Wärmestrahlungs-Betriebsmodus näherungsweise von der Annahme aus, dass eine dem innerhalb des Garraums 16 befindlichen Gargut 52 zugeführte Leistung im Wesentlichen auf Wärmestrahlung beruht. In dem Wärmestrahlungs-Betriebsmodus ist das Heizelement 18 aktiviert und insbesondere das weitere Heizelement 24 und die Gebläseeinheit 48 deaktiviert.

Im Folgenden wird ohne Beschränkung der Allgemeinheit davon ausgegangen, dass das Heizelement 18 die als Muffeldeckenwand 38 ausgebildete Muffelwandung 14 beheizt. Alternativ könnte das Heizelement 18 zumindest eine andere Muffelwandung 14 beheizen, wie beispielsweise die als Muffelbodenwand 36 ausgebildete Muffelwandung 14, wobei insbesondere nachfolgende Betrachtung analog anwendbar ist.

In dem Wärmestrahlungs-Betriebsmodus verwendet die Steuereinheit 30 zu der Ermittlung der dem innerhalb des Garraums 16 befindlichen Gargut 52 zugeführten Leistung folgende Formel als Ausgangsbasis:

$$\dot{Q}_{rad} = \sigma \cdot \varepsilon \cdot A_{top} \cdot F \cdot \left( T_{top}^4 - T_{food}^4 \right)$$

Hierin ist $\sigma$ eine Stephan-Boltzmann-Konstante. $\varepsilon$ ist eine Emissivität der Muffelwandung 14. $A_{top}$ ist eine Oberfläche der, insbesondere als Muffeldeckenwand 38 ausgebildeten, Muffelwandung 14. F ist ein Faktor, welcher von einer Geometrie der Muffel 12 abhängig ist. $T_{top}$ ist die von der Sensoreinheit 20 detektierte Temperatur. $T_{food}$ ist die von der dritten Sensoreinheit 28 detektierte Temperatur.

Die Steuereinheit 30 verwendet in dem Wärmestrahlungs-Betriebsmodus zu der Ermittlung der dem innerhalb des Garraums 16 befindlichen Gargut 52 zugeführten Leistung folgende Formel, welche insbesondere eine, insbesondere ausreichende, Näherung der als Ausgangsbasis verwendeten Formel darstellt:

$$\dot{Q}_{rad} \approx k_{rad} \cdot \left( T_{top} - T_{food} \right)$$

Hierin ist $k_{rad}$ ein bekannter Koeffizient, welcher insbesondere in einer Speichereinheit der Steuereinheit 30 gespeichert ist und welcher insbesondere mittels experimentellen Versuchen und/oder mittels theoretischen Berechnungen ermittelbar ist.

In den bekannten Koeffizienten geht die Emissivität der Muffelwandung 14 mit ein. Die Steuereinheit 30 berücksichtigt in dem Betriebszustand bei der Ermittlung der dem innerhalb des Garraums 16 befindlichen Gargut 52 zugeführten Leistung eine Emissivität der Muffelwandung 14.

In einem Misch-Betriebsmodus berücksichtigt die Steuereinheit 30 bei der Ermittlung der dem innerhalb des Garraums 16 befindlichen Gargut 52 zugeführten Leistung eine auf Wärmestrahlung beruhende Leistung und eine auf Konvektion beruhende Leistung. In dem Misch-Betriebsmodus sind das Heizelement 18 das weitere Heizelement 24 und die Gebläseeinheit 48 aktiviert.

Die Steuereinheit 30 könnte beispielsweise in wenigstens einem Betriebsmodus, insbesondere in dem Konvektions-Betriebsmodus und/oder in dem Wärmestrahlungs-Betriebsmodus und/oder in dem Misch-Betriebsmodus, bei der Ermittlung der dem innerhalb des Garraums 16 befindlichen Gargut 52 zugeführten Leistung eine auf Wärmeleitung beruhende Leistung berücksichtigen. Im vorliegenden Ausführungsbeispiel vernachlässigt die Steuereinheit 30 bei der Ermittlung der dem innerhalb des Garraums 16 befindlichen Gargut 52 zugeführten Leistung eine auf Wärmeleitung beruhende Leistung.

Beispielsweise könnte die Steuereinheit 30 in dem Wärmestrahlungs-Betriebsmodus bei der Ermittlung der dem innerhalb des Garraums 16 befindlichen Gargut 52 zugeführten Leistung zusätzlich eine Konvektion, insbesondere eine natürliche Konvektion, berücksichtigen. Der Wärmestrahlungs-Betriebsmodus könnte beispielsweise ein Grill-Betriebsmodus sein.

In einem Verfahren zu einem Betrieb der Gargerätevorrichtung 10 wird in dem Betriebszustand eine Temperatur der Muffelwandung 14 gemessen. In Abhängigkeit der Temperatur der Muffelwandung 14 wird eine dem innerhalb des Garraums 16 befindlichen Gargut 52 zugeführte Leistung ermittelt.

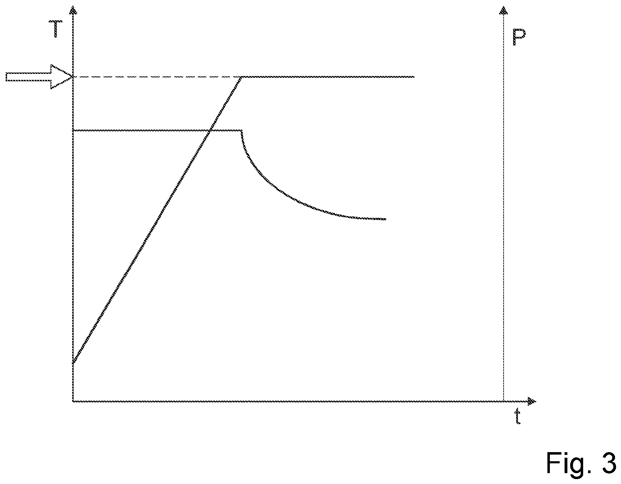

In dem Betriebszustand verwendet die Steuereinheit 30 die durch die zweite Sensoreinheit 26 detektierte Temperatur innerhalb des Garraums 16 und/oder die durch die Sensoreinheit 20 detektierte Temperatur zu Sicherheitszwecken. In einer Speichereinheit der Steuereinheit 30 ist ein Referenzwert für die durch die zweite Sensoreinheit 26 und/oder durch die Sensoreinheit 20 detektierte Temperatur hinterlegt. Der Referenzwert für die durch die zweite Sensoreinheit 26 und/oder durch die Sensoreinheit 20 detektierte Temperatur kennzeichnet eine maximal erlaubte Temperatur innerhalb des Garraums 16. In dem Betriebszustand reduziert die Steuereinheit 30 eine dem Heizelement 18 und/oder dem weiteren Heizelement 24 zugeführte Leistung sobald die durch die zweite Sensoreinheit 26 und/oder durch die Sensoreinheit 20 detektierte Temperatur den Referenzwert erreicht (vgl. Fig. 3). In diesem Fall steuert und/oder regelt die Steuereinheit 30 die Temperatur innerhalb des Garraums 16 und/oder die Temperatur der Muffelwandung 14 auf den Referenzwert.

Beispielsweise könnte in einer Speichereinheit der Steuereinheit 30, insbesondere zusätzlich zu den beschriebenen Betriebsmodi, zumindest ein weiterer Betriebsmodus gespeichert sein, bei welchem die Steuereinheit 30 insbesondere das Heizelement 18 und/oder das weitere Heizelement 24 in Abhängigkeit einer Temperatur innerhalb des Garraums 16 betreiben könnte.

**Bezugszeichen**

10  Gargerätevorrichtung
12  Muffel
14  Muffelwandung
16  Garraum

18    Heizelement
20    Sensoreinheit
22    Stelle
24    Weiteres Heizelement
26    Zweite Sensoreinheit
28    Dritte Sensoreinheit
30    Steuereinheit
32    Gargerät
34    Gargerätetür
36    Muffelbodenwand
38    Muffeldeckenwand
40    Muffelrückwand
42    Muffelseitenwand
44    Muffelseitenwand
46    Bedienerschnittstelle
48    Gebläseeinheit
50    Gargeräterückwand
52    Gargut

## Patentansprüche

**1.** Gargerätevorrichtung mit zumindest einer Muffel (12), welche zumindest eine Muffelwandung (14) aufweist und zumindest einen Garraum (16) wenigstens teilweise definiert, mit zumindest einem Heizelement (18), welches zu einer Beheizung der Muffelwandung (14) vorgesehen ist, und mit zumindest einer Sensoreinheit (20), welche zu einer Detektion zumindest einer Temperatur der Muffelwandung (14) vorgesehen ist, **dadurch gekennzeichnet, dass** die Sensoreinheit (20) dazu vorgesehen ist, die Temperatur der Muffelwandung (14) an der heißesten Stelle (22) der Muffelwandung (14) zu detektieren.

**2.** Gargerätevorrichtung nach Anspruch 1, **dadurch gekennzeichnet, dass** das Heizelement (18) als ein Induktionsheizelement ausgebildet ist.

**3.** Gargerätevorrichtung nach einem der vorhergehenden Ansprüche, **gekennzeichnet durch** zumindest ein weiteres Heizelement (24), welches als ein Widerstandsheizelement ausgebildet ist.

**4.** Gargerätevorrichtung nach einem der vorhergehenden Ansprüche, **gekennzeichnet durch** zumindest eine zweite Sensoreinheit (26), welche zu einer Detektion zumindest einer Temperatur innerhalb des Garraums (16) vorgesehen ist.

**5.** Gargerätevorrichtung nach einem der vorhergehenden Ansprüche, **gekennzeichnet durch** zumindest eine dritte Sensoreinheit (28), welche zu einer Detektion zumindest einer Temperatur zumindest eines innerhalb des Garraums (16) befindlichen Garguts (52) vorgesehen ist.

**6.** Gargerätevorrichtung nach einem der vorhergehenden Ansprüche, **gekennzeichnet durch** zumindest eine Steuereinheit (30), welche dazu vorgesehen ist, in Abhängigkeit von der durch die Sensoreinheit (20) detektierten Temperatur eine einem innerhalb des Garraurris (16) befindlichen Gargut (52) zugeführte Leistung zu ermitteln.

**7.** Gargerätevorrichtung nach den Ansprüchen 4, 5 und 6, **dadurch gekennzeichnet, dass** die Steuereinheit (30) dazu vorgesehen ist, die einem innerhalb des Garraums (16) befindlichen Gargut (52) zugeführte Leistung in verschiedenen Betriebsmodi in Abhängigkeit von durch verschiedene Sensoreinheiten (20, 26, 28) detektierten Temperaturen zu ermitteln.

**8.** Gargerätevorrichtung nach Anspruch 6 oder 7, **dadurch gekennzeichnet, dass** die Steuereinheit (30) dazu vorgesehen ist, bei der Ermittlung der einem innerhalb des Garraums (16) befindlichen Gargut (52) zugeführten Leistung eine Emissivität der Muffelwandung (14) zu berücksichtigen.

**9.** Gargerät, insbesondere Induktionsgargerät, mit zumindest einer Gargerätevorrichtung (10) nach einem der vorhergehenden Ansprüche.

**10.** Verfahren zu einem Betrieb einer Gargerätevorrichtung (10), insbesondere nach einem der Ansprüche 1 bis 8, mit zumindest einer Muffelwandung (14) und mit zumindest einem Heizelement (18), welches zu einer Beheizung der Muffelwandung (14) vorgesehen ist, wobei in wenigstens einem Betriebszustand eine Temperatur der Muffelwandung (14) gemessen wird, **dadurch gekennzeichnet, dass** die Temperatur der Muffelwandung (14) an der heißesten Stelle (22) der Muffelwandung (14) detektiert wird.

## Claims

**1.** Cooking appliance device with at least one muffle (12), which has at least one muffle wall (14) and at least partially defines at least one cooking chamber (16), with at least one heating element (18), which is provided for heating the muffle wall (14), and with at least one sensor unit (20), which is provided for detection of at least one temperature of the muffle wall (14), **characterised in that** the sensor unit (20) is provided to detect the temperature of the muffle wall (14) at the hottest point (22) of the muffle wall (14).

**2.** Cooking appliance device according to claim 1, **characterised in that** the heating element (18) is embodied as an induction heating element.

**3.** Cooking appliance device according to one of the preceding claims, **characterised by** at least one further heating element (24), which is embodied as a resistance heating element.

**4.** Cooking appliance device according to one of the preceding claims, **characterised by** at least one second sensor unit (26), which is provided for detection of at least one temperature within the cooking chamber (16).

**5.** Cooking appliance device according to one of the preceding claims, **characterised by** at least one third sensor unit (28), which is provided for detection of at least one temperature of at least one item to be cooked (52) located within the cooking chamber (16).

**6.** Cooking appliance device according to one of the preceding claims, **characterised by** at least one control unit (30), which is provided to determine the power output directed onto an item to be cooked (52) located within the cooking chamber (16), depending upon the temperature detected by the sensor unit (20).

**7.** Cooking appliance device according to claims 4, 5 and 6, **characterised in that** the control unit (30) is provided to determine the power output directed onto an item to be cooked (52) located within the cooking chamber (16) in different operating modes, depending upon temperatures detected by different sensor units (20, 26, 28).

**8.** Cooking appliance device according to claim 6 or 7, **characterised in that** the control unit (30) is provided to take account of the emissivity of the muffle wall (14) when determining the power output directed onto an item to be cooked (52) located within the cooking chamber (16).

**9.** Cooking appliance, in particular induction cooking appliance, with at least one cooking appliance device (10) according to one of the preceding claims.

**10.** Method for operating a cooking appliance device (10), in particular according to one of claims 1 to 8, with at least one muffle wall (14) and with at least one heating element (18), which is provided for heating the muffle wall (14), wherein in at least one operating status a temperature of the muffle wall (14) is measured, **characterised in that** the temperature of the muffle wall (14) is detected at the hottest point (22) of the muffle wall (14).

**Revendications**

**1.** Dispositif d'appareil de cuisson avec au moins un moufle (12), lequel présente au moins une paroi de moufle (14) et au moins un espace de cuisson (16) au moins partiellement défini, avec au moins un élément chauffant (18), prévu pour chauffer la paroi de moufle (14), et avec au moins une unité de capteurs (20), prévue pour une détection d'au moins une température de la paroi de moufle (14), **caractérisé en ce que** l'unité de capteurs (20) est prévue afin de détecter la température de la paroi de moufle (14) en l'endroit le plus chaud (22) de la paroi de moufle (14).

**2.** Dispositif d'appareil de cuisson selon la revendication 1, **caractérisé en ce que** l'élément chauffant (18) est formé sous la forme d'un élément chauffant à induction.

**3.** Dispositif d'appareil de cuisson selon l'une des revendications précédentes, **caractérisé par** au moins un élément chauffant supplémentaire (24) formé sous la forme d'un élément chauffant à résistance.

**4.** Dispositif d'appareil de cuisson selon l'une des revendications précédentes, **caractérisé par** au moins une deuxième unité de capteurs (26), prévue pour une détection d'au moins une température à l'intérieur de l'espace de cuisson (16).

**5.** Dispositif d'appareil de cuisson selon l'une des revendications précédentes, **caractérisé par** au moins une troisième unité de capteurs (28), prévue pour une détection d'au moins une température d'au moins un aliment à cuire (52) se trouvant à l'intérieur de l'espace de cuisson (16).

**6.** Dispositif d'appareil de cuisson selon l'une des revendications précédentes, **caractérisé par** au moins une unité de commande (30), prévue afin de déterminer, en fonction de la température détectée par l'unité de capteurs (20), une puissance administrée à un aliment à cuire (52) se trouvant à l'intérieur de l'espace de cuisson (16).

**7.** Dispositif d'appareil de cuisson selon les revendications 4, 5 et 6, **caractérisé en ce que** l'unité de commande (30) est prévue afin de déterminer la puissance administrée à un aliment à cuire (52) se trouvant à l'intérieur de l'espace de cuisson (16) dans différents modes de fonctionnement en fonction des températures détectées par différentes unités de capteurs (20, 26, 28).

**8.** Dispositif d'appareil de cuisson selon la revendication 6 ou 7, **caractérisé en ce que** l'unité de commande (30) est prévue afin de tenir compte d'une émissivité de la paroi de moufle (14) lors de la détermination de la puissance administrée à un aliment à cuire (52) se trouvant à l'intérieur de l'espace de cuisson (16).

9. Appareil de cuisson, en particulier appareil de cuisson à induction, avec au moins un dispositif d'appareil de cuisson (10) selon l'une des revendications précédentes.

10. Procédé d'exploitation d'un dispositif d'appareil de cuisson (10), en particulier selon l'une des revendications 1 à 8, avec au moins une paroi de moufle (14) et avec au moins un élément chauffant (18), prévu pour chauffer la paroi de moufle (14), dans lequel une température de la paroi de moufle (14) est mesurée dans au moins un état de fonctionnement, **caractérisé en ce que** la température de la paroi de moufle (14) est détectée en l'endroit le plus chaud (22) de la paroi de moufle (14).

26  46  30  22  20  32

10

14,40  14,38

50  12

14,42  24

28  34

16  14,44

52

48  14,36

**Fig. 1**

26  18  22  20  14,38  10

14,40  14,44

50  12

16  24

14,42

28  52

18  48  14,36

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3790735 A